Europäisches Patentamt

European Patent Office

Office européen des brevets

(11) Veröffentlichungsnummer: **0 504 590 A1**

## (12) EUROPÄISCHE PATENTANMELDUNG

(21) Anmeldenummer: **92102545.8**

(22) Anmeldetag: **15.02.92**

(51) Int. Cl.5: **B25J 19/00**

(30) Priorität: **19.03.91 DE 4108939**

(43) Veröffentlichungstag der Anmeldung:
**23.09.92 Patentblatt 92/39**

(84) Benannte Vertragsstaaten:
**AT CH DE DK ES FR GB IT LI NL SE**

(71) Anmelder: **BODENSEEWERK GERÄTETECHNIK GmbH**
**Alte Nussdorfer Strasse 15, Postfach 101 155**
**W-7770 Überlingen(DE)**

(72) Erfinder: **Kempas, Hagen**
**Halde 10**
**W-7797 Illmensee 2(DE)**

(74) Vertreter: **Weisse, Jürgen, Dipl.-Phys. et al**
**Patentanwälte Dipl.-Phys. Jürgen Weisse**
**Dipl.-Chem. Dr. Rudolf Wolgast Bökenbusch**
**41 Postfach 11 03 86**
**W-5620 Velbert 11 Langenberg(DE)**

(54) **Verfahren zum Kalibrieren von hochgenauen Robotern.**

(57) Ein Verfahren zur Kalibrierung von hochgenauen Robotern mit mehreren Armen und Achsen, umfaßt die Verfahrensschritte: Anbringen eines Drehgeschwindigkeitssensors (30) an einem Arm des Roboters, Einstellen des Armes in eine vorgegebene Nominalposition, Erzeugen einer Drehgeschwindigkeit um eine Achse (40) des Roboters, Vergleichen der von dem Drehgeschwindigkeitssensor (30) um dessen Eingangsachse (46,48) gemessenen Drehgeschwindigkeit mit der sich für die Nominalposition ergebenden nominellen Komponente der um die besagte Achse (40) erzeugten Drehgeschwindigkeit und Korrektur der Parameter des Roboters nach Maßgabe der dabei festgestellten Abweichungen.

FIG.2

Die Erfindung betrifft ein Verfahren zum Kalibrieren von hochgenauen R obotern mit mehreren Armen und Achsen.

Es sind Roboter bekannt, die mehrere Arme aufweisen, welche gegeneinander um jeweils zwei Achsen verdrehbar sind. Ein erster Arm ist um eine erste Achse (Rollachse) gegenüber einem Fundament verdrehbar gelagert. An dem ersten Arm ist ein zweiter Arm um eine zweite Achse (Nickachse) drehbar gelagert, die zu der ersten Achse senkrecht ist. Der zweite Arm ist weiter um eine zu der zweiten Achse senkrechte dritte Achse (Rollachse) drehbar usw. Ein äußerster Arm trägt schließlich eine Werkzeugaufnahme, über welche ein Werkzeug mit dem Arm verbunden werden kann. Dieser äußerste Arm ist ebenfalls um eine Nickachse drehbar mit dem nächstinneren Arm verbunden und außerdem um eine Rollachse drehbar. Bekannte Roboter haben z.B. sechs solcher Achsen (Nick- und Rollachsen). Die Arme werden durch Stellmotore bewegt, die um die verschiedenen Achsen wirksam sind. Zur Positionierung des Werkzeugs werden die Stellmotore mit geeigneten Signalen angesteuert.

Zur genauen Positionierung eines an der Werkzeugaufnahme sitzenden Werkzeugs müssen die Gelenke zwischen den Armen genau definierte Drehbewegungen um die verschiedenen Achsen ausführen. Dabei ergeben sich Fehlerquellen durch Ungenauigkeiten der Winkelabgriffe, durch Fehlausrichtung der Achsen oder durch Längenfehler der Arme, die durch Fertigungstoleranzen oder thermische Ausdehnung bedingt sein können. Es ist daher erforderlich, den Roboter zu kalibrieren.

Die Roboter können dabei Meß- oder Montageroboter sein.

Es ist bekannt, mit dem Werkzeug des Roboters bestimmte, bekannte Positionen anzusteuern. Diese Positionen können dabei durch Flächen eines Eichkörpers gebildet sein. Aus der Abweichung der dabei erreichten Positionen des Werkzeugs von den bekannten "Sollpositionen" können die Fehler mathematisch bestimmt werden.

Dieses bekannten Verfahren sind für einen sechachsigen Roboter nur bedingt verwendbar. Die Kalibrierung ist jeweils nur für einen begrenzten räumlichen Bereich gültig. Es lassen sich nicht alle wesentlichen Fehlerterme bestimmen. Die Handhabung ist sehr aufwendig.

Der Erfindung liegt die Aufgabe zugrunde, Roboter mit möglichst geringem Aufwand und mit hoher Genauigkeit zu kalibrieren.

Erfindungsgemäß wird diese Aufgabe gelöst, durch die Verfahrensschritte:

(a) Anbringen eines Drehgeschwindigkeitssensors an einem Arm des Roboters,

(b) Einstellen des Armes in eine vorgegebene Nominalposition,

(c) Erzeugen einer Drehgeschwindigkeit um eine Achse des Roboters,

(d) Vergleichen der von dem Drehgeschwindigkeitssensor um dessen Eingangsachs gemessenen Drehgeschwindigkeit mit der sich für die Nominalposition ergebenden nominellen Komponente der um die besagte Achse erzeugten Drehgeschwindigkeit und

(e) Korrektur der Parameter des Roboters nach Maßgabe der dabei festgestellten Abweichungen.

Der Drehgeschwindigkeitssensor kann in jeder möglichen Position des Roboters arbeiten. Die Kalibrierung ist dadurch nicht auf einen bestimmten räumlichen Bereich von Positionen des Roboters beschränkt. Damit können Fehler des Roboters für alle Positionen bestimmt und alle wesentlichen Parameter für die Kompensation solcher Fehler ermittelt werden. Es sind keine Eichkörper erforderlich.

Dabei kann der Drehgeschwindigkeitssensor an einer Werkzeugaufnahme am äußersten Arm des Roboters angebracht werden. Die um die besagte Achse erzeugte Drehgeschwindigkeit und die Nominalposition können jeweils so gewählt sein, daß die nominelle, auf die Eingangsachse des Drehgeschwindigkeitssensors bezogene Komponente dieser Drehgeschwindigkeit null ist. Wenn der Drehgeschwindigkeitssensor dann eine Drehgeschwindigkeit anzeigt, ist dieses Drehgeschwindigkeitssignal ein Maß für die Fehlausrichtung der Achse. Vorteilhafterweise wird das Verfahren nach der Erfindung in der Weise durchgeführt, daß ausgehend von der Längsachse des äußersten, die Werkzeugaufnahme tragenden Armes aufeinanderfolgende Achsen des Roboters vermessen und jeweils deren Fehler durch Korrektur der Parameter kompensiert werden. Auf diese Weise wird erst eine Achse hinsichtlich ihrer Ausrichtfehler korrigiert. Dann kann unter Zugrundelegung dieser Korrektur die nächste Achse korrigiert werden usw. Als Drehgeschwindigkeitssensor kann ein zweiachsiger Wendekreisel benutzt werden. Vorteilhafterweise ist dann der zweiachsige Wendekreisel so an der Werkzeugaufnahme des Roboters angebracht, daß seine Drallachse mit der nominellen Achse des die Werkzeugaufnahme tragenden äußersten Armes zusammenfällt und seine Eingangsachsen senkrecht zu dieser nominellen Achse liegen.

Es ist natürlich auch möglich, jede Achse unabhängig von benachbarten Achsen je nach Prozedur und Roboterkinematik zu korrigieren. Der Drehgeschwindigkeitssensor kann statt einer Drehgeschwindigkeit um eine Achse auch Drehgeschwindigkeiten um zwei Achsen messen, die mit zugehörigen nominellen Komponenten verglichen werden.

Ein Ausführungsbeispiel der Erfindung ist nachstehend unter Bezugnahme auf die zugehörigen Zeichnungen näher erläutert.

Fig.1    zeigt perspektivisch ein kinematisches Modell eines sechsachsigen Roboters mit einem zweiachsigen Wendekreisel an der Werkzeugaufnahme.

Fig.2    ist eine schematische Darstellung und veranschaulicht die Kalibrierung eines Roboters mittels eines zweiachsigen Wendekreisels.

Fig.3    ist eine Prinzipdarstellung eines Roboters mit einem zweiachsigen Wendekreisel an der Werkzeugaufnahme, durch welchen eine Kalibrierung des Roboters erfolgt.

Fig.4    ist eine Darstellung ähnlich Fig.3 und veranschaulicht die Kalibrierung der vierten Achse (Nickachse), wobei der Fehlerwinkel stark übertrieben dargestellt ist.

Fig.5    ist eine Darstellung ähnlich Fig.3 und veranschaulicht die Kalibrierung der zweiten Achse, ebenfalls einer Nickachse, wobei ebenfalls der Fehlerwinkel stark übertrieben dargestellt ist.

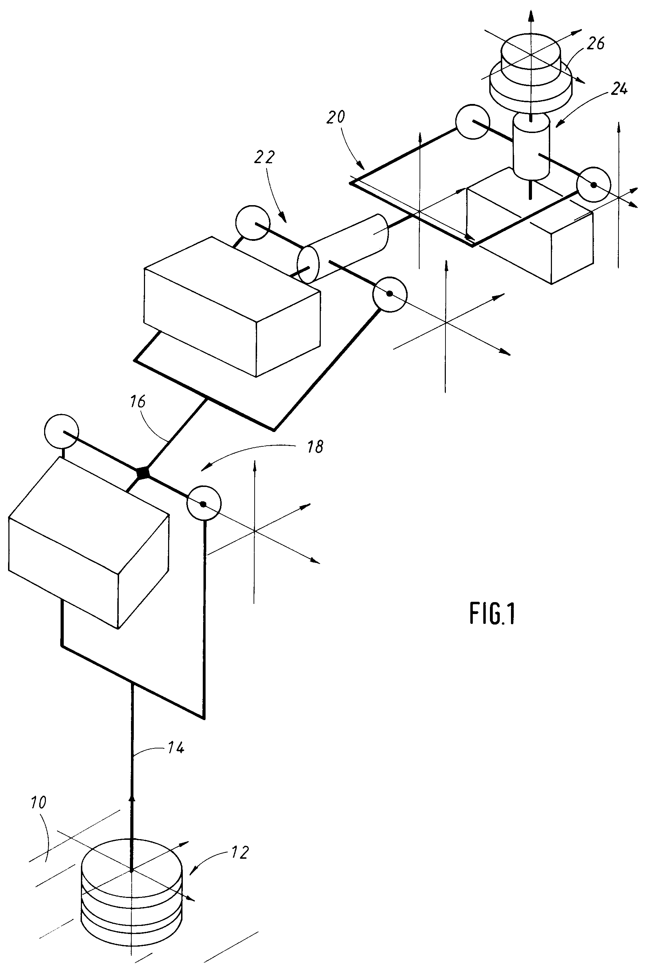

In Fig.1 ist mit A1 eine erste Achse des Roboters bezeichnet. Die erste Achse A1 ist vertikal in einem Fundament 10 angeordnet. Um die Achse A1 ist der Roboter in Lagern 12 durch einen (nicht dargestellten) Stellmotor verdrehbar. Zu diesem Zweck ist der Stellmotor von Steuersignalen ansteuerbar. Ein (ebenfalls nicht dargestellter) Winkelgeber liefert den Drehwinkel um die erste Achse A1. Die erste Achse A1 bildet die Längsachse eines vertikal sich erstreckenden ersten Armes 14.

Gegenüber dem ersten Arm 14 ist ein zweiter Arm 16 mittels eines Gelenks 18 um eine zweite Achse A2 gegenüber dem ersten Arm 14 verschwenkbar. Die zweite Achse A2 verläuft senkrecht zu der ersten Achse A1 . Die zweite Achse A2 verläuft außerdem senkrecht zu der Längsachse des zweiten Armes 16. Die zweite Achse A2 ist somit eine Nickachse.

Ein dritter Arm 20 ist gegenüber dem zweiten Arm 16 mittels eines Gelenks 22 um eine dritte Achse A3 schwenkbar gelagert. Die Achse A3 verläuft parallel zu der zweiten Achse A2. Außerdem ist der Arm 20 um seine Längsachse drehbar. Diese Längsachse bildet die vierte Achse A4 des Roboters. Die vierte Achse A4 ist senkrecht zu der dritten Achse A3. Die dritte Achse A3 ist eine Nickachse, die vierte Achse A4 ist eine Rollachse.

Ein vierter Arm 24 ist an dem dritten Arm 20 um eine fünfte Achse A5 drehbar gelagert. Die fünfte Achse A5 verläuft senkrecht zu der vierten Achse A4. Außerdem ist der vierte Arm 24 um seine Längsachse drehbar. Diese Längsachse ist die sechste Achse A6 des Roboters. Die sechste Achse A6 ist senkrecht zu der fünften Achse A5.

Die fünfte Achse A5 ist eine Nickachse. Die sechste Achse A6 ist eine Rollachse. Der vierte Arm 24 stellt den äußersten Arm des Roboters dar. Der vierte Arm 24 trägt an seinem äußeren Ende eine Werkzeugaufnahme 26. Auf diese Werkzeugaufnahme wird zur Kalibrierung ein zweiachsiger Wendekreisel so aufgesetzt, daß seine Drallachse mit der sechsten Achse A6 zusammenfällt.

Die Arme 16, 20 und 24 können ebenfalls durch (nicht dargestellte) Stellmotore um die Achsen A2, A3, A4, A5 bzw. A6 verschwenkt werden. Die jeweilige Position wird durch (ebenfalls nicht dargestellte) Winkelgeber abgegriffen. Durch Steuersignale können die Stellmotore so angesteuert werden, daß jeder Arm in einer bestimmten Winkelposition in Nick- und ggf. Rollage zu den benachbarten Armen steht.

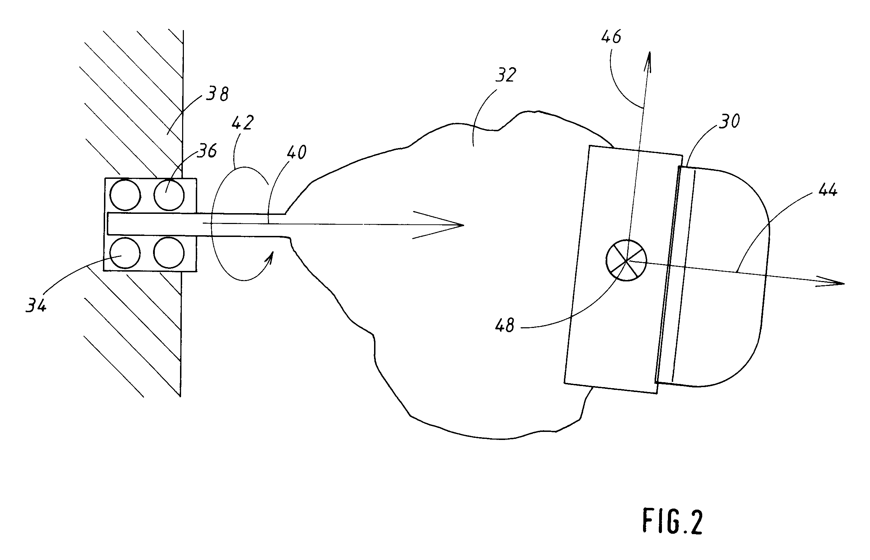

In Fig.2 ist schematisch dargestellt, wie ein zweiachsiger Wendekreisel 30 zur Bestimmung von Abweichungen der Achsen von einer nominellen Lage benutzt werden kann.

Der zweiachsige Wendekreisel 30 ist an der Werkzeugaufnahme eines Roboters angebracht. Der Roboter kann ein beliebiger mehrachsiger Roboter sein, beispielsweise ein sechsachsiger Roboter nach Fig.1. Der Roboter ist hier generell als "Meßkörper" 32 schematisch angedeutet. Der Roboter ist in Lagern 34 und 36 gegenüber einem Fundament 38 um eine Achse 40 drehbar gelagert und wird um diese Achse 40 gegenüber dem Fundament 38 angetrieben. Das ist durch einen Pfeil 42 dargestellt.

Der zweiachsige Wendekreisel 30 hat eine Drallachse 44 und zwei Eingangsachsen 46 und 48. Die Eingangsachsen 46 und 48 sind senkrecht zueinander und zu der Drallachse. Der zweiachsige Wendekreisel 30 ist so angeordnet, daß in der zu vermessenden Position des Roboters nominell, d.h. wenn das System keine Ausrichtfehler aufweist, die Drallachse 44 des Wendekreisels 30 parallel zu der Achse 40 liegt, um welche der Roboter angetrieben wird. Wenn keine Ausrichtfehler vorliegen, dann fühlen die Eingangsachsen 46 und 46 keine Komponenten der Drehgeschwindigkeit. Wenn aber Ausrichtfehler vorhanden sind, dann treten an den Eingangsachsen 46 und 48 Komponenten der Drehgeschwindigkeit auf. Werden diese Komponenten ins Verhältnis gesetzt zu der eingeprägten Drehgeschwindigkeit, so kann hieraus der Ausricht-Fehlwinkel bestimmt werden. Es ist dann möglich, im mathematischen Übertragungsmodell des Roboters diese Fehler zu berücksichtigen.

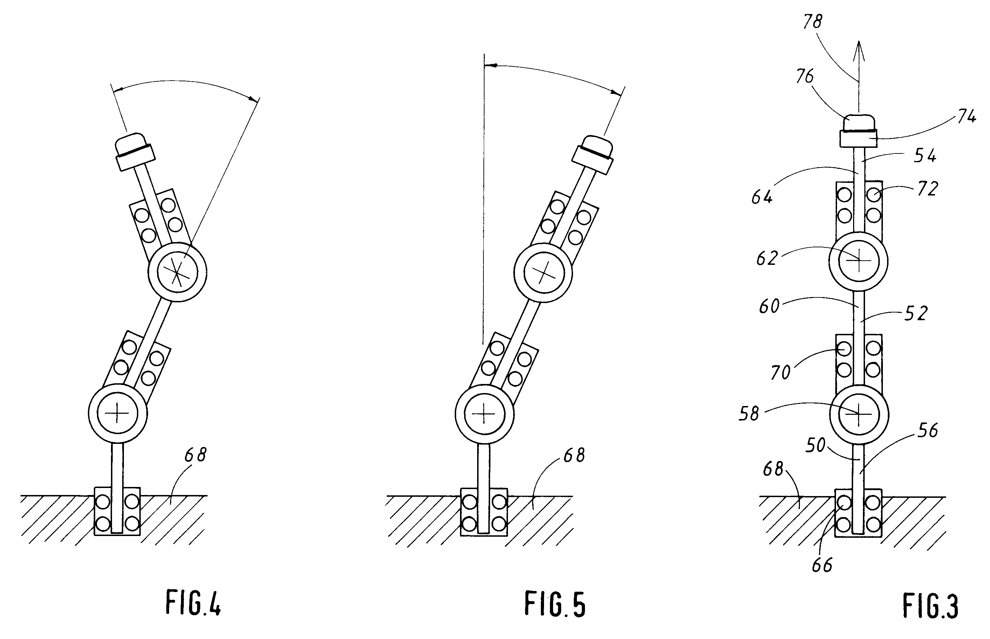

Fig.3 zeigt einen fünfachsigen Roboter mit drei Armen 50, 52 und 54. Die Arme sind um Achsen 56, 58, 60, 62 und 64 gegeneinander beweglich.

Der erste Arm 50 ist in Lagern 66 gegenüber dem Fundament 68 um die vertikale erste Achse 50 verdrehbar. Die erste Achse 56 ist eine Längsachse des Armes 50 und damit eine Rollachse. Der Arm 52 ist gegenüber dem Arm 50 um die zweite Achse 58 verschwenkbar. Die zweite Achse 58 verläuft senkrecht zu der ersten Achse 56. Die zweite Achse 58 ist somit eine Nickachse. Der zweite Arm 52 ist weiterhin um seine eigene Längsachse, nämlich die dritte Achse 60, in Lagern 70 drehbar. Die dritte Achse 60 verläuft senkrecht zu der zweiten Achse 58. Die dritte Achse 60 ist wieder eine Rollachse. Der dritte Arm 54 ist gegenüber dem zweiten Arm 52 um eine vierte Achse 62 schwenkbar. Die vierte Achse 62 verläuft senkrecht zu der dritten Achse 60. Die vierte Achse 62 ist eine Nickachse. Der dritte Arm 54 ist außerdem in Lagern 72 um seine Längsachse drehbar. Diese Längsachse ist die fünfte Achse 64. Die fünfte Achse 64 ist senkrecht zu der vierten Achse 62. Die fünfte Achse ist wieder eine Rollachse.

Am Ende des dritten Armes 54 sitzt eine Werkzeugaufnahme 74, die einen zweiachsigen Wendekreisel 76 trägt. Der Wendekreisel 76 ist so an der Werkzeugaufnahme 74 angebracht, daß seine Drallachse 78 in der Richtung der fünften Achse 64 liegt. Die Eingangsachsen des Wendekreisels liegen senkrecht zu der Drallachse und zueinander.

Die Kalibrierung eines solchen Roboters wird nachstehend anhand der Fig.4 und 5 in einem zweidimensionalen Beispiel erläutert. Es ist dabei zur Vereinfachung angenommen, daß alle Ausrichtfehler nur in der Papierebene von Fig.4 und 5 auftreten.

Der dritte Arm 54 wird um die fünfte Achse 64 angetrieben. Dann sollte der Wendekreisel an seinen beiden Eingangsachsen theoretisch keine Komponente der Drehgeschwindigkeit erfassen.Wenn an den Eingangsachsen trotzdem Drehgeschwindigkeitssignale auftreten, dann sind diese Signale durch Ausrichtfehler zwischen Wendekreisel und drittem Arm 54 bedingt. Die Drallachse 78 fluchtet nicht genau mit der fünften Achse 64. Diese Signale können kompensiert werden.

Der Wendekreisel 76 verhält sich dann so, als ob er richtig zu der fünften Achse ausgerichtet wäre.

Zur Kalibrierung der fünften Achse wird der Roboter in eine gestreckte Position gefahren, die nominell der Position von Fig.3 entspricht, wenn also alle Rollachsen 50,52 und 54 fluchten. Es wird dann der zweite Arm 52 um die dritte Achse 60 angetrieben. Wenn die fünfte Achse 64 mit der dritten Achse 60 genau fluchten würde, dürfte der Wendekreisel 76 keine Komponenten der Drehgeschwindigkeit an seinen Eingangsachsen fühlen. Auftretende Komponenten sind darauf zurückzuführen, daß die dritte Achse 60 und die fünfte Achse nicht genau fluchten. Es liegt ein Ausrichtfehler vor, der in Fig.4 stark übertrieben durch den Winkel $W_4$ dargestellt ist. In Fig.4 ist angenommen, daß der Stellmotor und Winkelgeber um die Achse 62 einen Winkelfehler $W_4$ ergeben.

Die Signale des Wendekreisels 76 können dann benutzt werden, um die Steuersignale zu korrigieren, die auf den um die vierte Achse 62 wirkenden Stellmotor so zu korrigieren, daß die fünfte Achse 64 zu der dritten Achse ausgerichtet ist. Es ergibt sich dann eine Situation wie sie in Fig.5 dargestellt ist. Die dritte und die fünfte Achse 60 bzw. 64 fluchten genau. Theoretisch sollte auch die erste Achse 56 mit der dritten und fünften Achse 60 bzw. 64 fluchten.

Jetzt wird der erste Arm 50 um die erste Achse 56 angetrieben. Wieder ergibt dich bei einem Ausrichtfehler $W_2$, der in Fig.5 stark übertrieben dargestellt ist, eine Komponente der Drehgeschwindigkeit an der in der Papierebene von Fig.5 liegenden Eingangsachse. Diese Komponente ist ein Maß für den Ausrichtfehler. Das Steuersignal für den um die zweite Achse 58 wirkenden Stellmotor wird so korrigiert, daß schließlich alle Rollachsen 56, 60 und 64 genau fluchten, wie das in Fig.3 dargestellt ist.

Die Korrekturen der Steuersignale bleiben auch bei anderen Positionen des Roboters bestehen.

Es können auf diese Weise nacheinander die verschiedenen Achsen des Roboters kalibriert werden. Die Kalibrierung erfolgt dabei bei jedem Schritt nur für eine Achse, ohne daß Ausrichtfehler der anderen Achsen gleichzeitig berücksichtigt werden müßten. Bei einer dreidimensionalen Betrachtung ergeben sich für jede der Rollachsen zwei Kreiselsignale an den beiden Eingangsachsen des zweiachsigen Wendekreisels 76. Korrektursinale werden dabei nicht nur auf die um die Nickachsen wirksamen Stellmotoren aufgeschaltet sondern auch auf die um die Stellmotoren, die um die nächstinneren Rollachsen wirksam sind. Die Korrektursignale ergeben sich für jede Rollachse durch nur zwei Gleichungen mit zwei Unbekannten.

Die Kalibrierung der Nickachsen 58 und 62 kann auf folgende Weise geschehen:
Die Stellmotore, die um die Nickachsen 58 und 62 wirksam sind, werden bei nominell paralleler Orientierung, wie sie in Fig.3 dargestellt ist, mit entgegengesetzt gleicher Winkelgeschwindigkeit angesteuert. Dann sollte die Orientierung des Wendekreisels 76 unverändert bleiben. Wenn aber die Nickachsen nicht genau parallel sind, treten Komponenten der Winkelgeschwindigkeit an den beiden Eingangsachsen des Wendekreisels auf. Diese sind wieder ein Maß für die Ausrichtfehler der Nickachsen. Diese Ausrichtfehler können durch Korrektursignale an den um die nächstinneren Rollachsen kompensiert werden.

**Patentansprüche**

1. Verfahren zur Kalibrierung von hochgenauen Robotern mit mehreren Armen und Achsen, **gekennzeichnet durch die Verfahrensschritte:**

   (a) Anbringen eines Drehgeschwindigkeitssensors (30,76) an einem Arm des Roboters,

   (b) Einstellen des Armes in eine vorgegebene Nominalposition,

   (c) Erzeugen einer Drehgeschwindigkeit um eine Achse (40;52,56) des Roboters,

   (d) Vergleichen der von dem Drehgeschwindigkeitssensor (30;76) um dessen Eingangsachse (46,48) gemessenen Drehgeschwindigkeit mit der sich für die Nominalposition ergebenden nominellen Komponente der um die besagte Achse (40;56,60) erzeugten Drehgeschwindigkeit und

   (e) Korrektur der Parameter des Roboters nach Maßgabe der dabei festgestellten Abweichungen.

2. Verfahren nach Anspruch 1, **dadurch gekennzeichnet, daß** der Drehgeschwindigkeitssensor an einer Werkzeugaufnahme (74) am äußersten Arm (54) des Roboters angebracht wird.

3. Verfahren nach Anspruch 1 oder 2, **dadurch gekennzeichnet, daß** die um die besagte Achse (40;56,60) erzeugte Drehgeschwindigkeit und die Nominalposition jeweils so gewählt sind, daß die nominelle Komponente dieser Drehgeschwindigkeit null ist.

4. Verfahren nach Anspruch 2, **dadurch gekennzeichnet, daß** ausgehend von der Längsachse (64) des äußersten, die Werkzeugaufnahme (74) tragenden Arm (54) aufeinanderfolgende Achsen (60,56) des Roboters vermessen und jeweils deren Fehler durch Korrektur der Parameter kompensiert werden.

5. Verfahren nach einem der Ansprüche 1 bis 4, **dadurch gekennzeichnet, daß** als Drehgeschwindigkeitssensor ein zweiachsiger Wendekreisel (76) benutzt wird.

6. Verfahren nach Anspruch 5, **dadurch gekennzeichnet, daß** der zweiachsige Wendekreisel (76) so an der Werkzeugaufnahme (74) des Roboters angebracht ist, daß seine Drallachse (78) mit der nominellen Achse (64) des die Werkzeugaufnahme (74) tragenden äußersten Armes (54) zusammenfällt und seine Eingangsachsen senkrecht zu dieser nominellen Achse (64) liegen.

FIG.1

FIG.2

FIG.3

FIG.5

FIG.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 128 763 (INOUE-JAPAX RESEARCH INC.)<br>* Seite 7, Zeile 25 - Seite 9, Zeile 32 *<br>--- | 1-6 | B25J19/00 |
| X | US-A-4 949 026 (MEAD)<br>* Spalte 3, Zeile 26 - Zeile 49; Anspruch 1 *<br><br>----- | 1,2 | |

RECHERCHIERTE SACHGEBIETE (Int. Cl.5)

B25J

Der vorliegende Recherchenbericht wurde für alle Patentansprüche erstellt

| Recherchenort | Abschlußdatum der Recherche | Prüfer |
|---|---|---|
| DEN HAAG | 19 JUNI 1992 | LAMMINEUR P.C.G. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
..................................................................................
& : Mitglied der gleichen Patentfamilie, übereinstimmendes
    Dokument

EPO FORM 1503 03.82 (P0403)